# EUROPEAN PATENT SPECIFICATION

(11) **EP 1 249 817 B1**
(45) Date of publication and mention of the grant of the patent: **08.08.2007**
(21) Application number: 02290586.3
(22) Date of filing: 08.03.2002
(51) Int. Cl.: G09G 3/36, H04N 5/20

(54) **Reducing sparkle artifacts in an image display by limiting low brightness slew rate**
Verminderung von Aufblitzartefakten in einer Bildanzeige durch Begrenzung der Anstiegsgeschwindigkeit bei niedrigeren Leuchtstärken
Réduction des artecfacts étincelants dans un affichage d'image par limitation de la pente de transition aux faibles luminosités

(30) Priority: 09.03.2001 US 803248
(43) Date of publication of application: 16.10.2002
(73) Proprietor: Thomson Licensing, 92100 Boulogne-Billancourt (FR)
(72) Inventor: Willis, M. Donald Henry, Indianapolis, IN 46250 (US); Hague, M. John Alan, Indianapolis, IN 46220 (US)
(74) Representative: Ruellan-Lemonnier, Brigitte

(56) References cited:
- EP-A- 1 225 558
- EP-A- 1 239 449
- EP-A- 1 239 450
- EP-A- 1 339 039
- US-A- 4 799 105

## Description

### Background of the Invention

### 1. Field of the Invention

This invention relates to the field of video systems utilizing a liquid crystal display (LCD), and in particular, to video systems utilizing normally white liquid crystal on silicon imagers, the term "imager" being herein used to denote a display.

### 2. Description of Related Art

Liquid crystal on silicon (LCOS) can be thought of as one large liquid crystal formed on a silicon wafer. The silicon wafer is divided into an incremental array of tiny plate electrodes. A tiny incremental region of the liquid crystal is influenced by the electric field generated by each tiny plate and the common plate. Each such tiny plate and corresponding liquid crystal region are together referred to as a cell of the imager. Each cell corresponds to an individually controllable pixel. A common plate electrode is disposed on the other side of the liquid crystal. Each cell, or pixel, remains lighted with the same intensity until the input signal is changed, thus acting as a sample and hold. The pixel does not decay, as is the case with the phosphors in a cathode ray tube. Each set of common and variable plate electrodes forms an imager. One imager is provided for each color, in this case, one imager each for red, green and blue.

It is typical to drive the imager of an LCOS display with a frame-doubled signal to avoid 30 Hz flicker, by sending first a normal frame (positive picture) and then an inverted frame (negative picture) in response to a given input picture. The generation of positive and negative pictures ensures that each pixel will be written with a positive electric field followed by a negative electric field. The resulting drive field has a zero DC component, which is necessary to avoid the image sticking, and ultimately, permanent degradation of the imager. It has been determined that the human eye responds to the average value of the brightness of the pixels produced by these positive and negative pictures.

The drive voltages are supplied to plate electrodes on each side of the LCOS array. In the presently preferred LCOS system to which the inventive arrangements pertain, the common plate is always at a potential of about 8 volts. This voltage can be adjustable. Each of the other plates in the array of tiny plates is operated in two voltage ranges. For positive pictures, the voltage varies between 0 volts and 8 volts. For negative pictures the voltage varies between 8 volts and 16 volts.

The light supplied to the imager, and therefore supplied to each cell of the imager, is field polarized. Each liquid crystal cell rotates the polarization of the input light responsive to the root mean square (RMS) value of the electric field applied to the cell by the plate electrodes. Generally speaking, the cells are not responsive to the polarity (positive or negative) of the applied electric field. Rather, the brightness of each pixel's cell is generally only a function of the rotation of the polarization of the light incident on the cell. As a practical matter, however, it has been found that the brightness can vary somewhat between the positive and negative field polarities for the same polarization rotation of the light. Such variation of the brightness can cause an undesirable flicker in the displayed picture.

In this embodiment, in the case of either positive or negative pictures, as the field driving the cells approaches a zero electric field strength, corresponding to 8 volts, the closer each cell comes to white, corresponding to a full on condition. Other systems are possible, for example where the common voltage is set to 0 volts. It will be appreciated that the inventive arrangements taught herein are applicable to all such positive and negative field LCOS imager driving systems.

Pictures are defined as positive pictures when the variable voltage applied to the tiny plate electrodes is less than the voltage applied to the common plate electrode, because the higher the tiny plate electrode voltage, the brighter the pixels. Conversely, pictures are defined as negative pictures when the variable voltage applied to the tiny plate electrodes is greater than the voltage applied to the common plate electrode, because the higher the tiny plate electrode voltage, the darker the pixels. The designations of pictures as positive or negative should not be confused with terms used to distinguish field types in interlaced video formats.

The present state of the art in LCOS requires the adjustment of the common-mode electrode voltage, denoted V_{ITO}, to be precisely between the positive and negative field drive for the LCOS. The subscript ITO refers to the material indium tin oxide. The average balance is necessary in order to minimize flicker, as well as to prevent a phenomenon known as image sticking.

A light engine having an LCOS imager has a severe non-linearity in the display transfer function, which can be corrected by a digital lookup table, referred to as a gamma table. The gamma table corrects for the differences in gain in the transfer function. Notwithstanding this correction, the strong non-linearity of the LCOS imaging transfer function for a normally white LCOS imager means that dark areas have a very low light-versus-voltage gain. Thus, at lower brightness levels, adjacent pixels that are only moderately different in brightness need to be driven by very different voltage levels. This produces a fringing electrical field having a component orthogonal to the desired field. This orthogonal field produces a brighter than desired pixel, which in turn can produce undesired bright edges on objects. The presence of such orthogonal fields is denoted declination. The image artifact caused by declination and perceived by the viewer is denoted sparkle. The areas of the picture in which declination occurs appear to have sparkles of light over the underlying image. In effect, dark pixels affected by declination are too bright, often five times as bright as they should be. Sparkle comes in red, green and blue colors, for each color produced by the imagers. However, the green sparkle is the most evident when the problem occurs. Accordingly, the image artifact caused by declination is also referred to as the green sparkle problem.

LCOS imaging is a new technology and green sparkle caused by declination is a new kind of problem. Various proposed solutions by others include signal processing the entire luminance component of the picture, and in so doing, degrade the quality of the entire picture. The trade-off for reducing declination and the resulting sparkle is a picture with virtually no horizontal sharpness at all. Picture detail and sharpness simply cannot be sacrificed in that fashion.

One skilled in the art would expect the sparkle artifact problem attributed to declination to be addressed and ultimately solved in the imager as that is where the declination occurs. However, in an emerging technology such as LCOS, there simply isn't an opportunity for parties other than the manufacturer of the LCOS imagers to fix the problem in the imagers. Moreover, there is no indication that an imager-based solution would be applicable to all LCOS imagers. Accordingly, there is an urgent need to provide a solution to this problem that can be implemented without modifying the LCOS imagers.

The features in the preambles of the independent claims are disclosed in US 4 799 105.

### Brief Summary of the Invention

The inventive arrangements taught herein solve the problem of sparkle in liquid crystal imagers attributed to declination without degrading the high definition sharpness of the resulting display. Moreover, and absent an opportunity to address the problem by modification of imagers, the inventive arrangements advantageously solve the sparkle problem by modifying the video signal to be displayed, thus advantageously presenting a solution that can be applied to all liquid crystal imagers, including LCOS imagers. Any reduction in detail is advantageously and adjustably limited to dark scenes, even very dark scenes. The video signal is signal processed in such a way that higher brightness level information is advantageously unchanged, thus retaining high definition detail. At the same time, the lower brightness levels of the video signal that directly result in sparkle are processed in such a way that the sparkle is advantageously prevented altogether, or at least, is reduced to a level that cannot be perceived by a viewer. The signal processing of the lower brightness level information advantageously does not unacceptably degrade the detail of the high definition display. Moreover, signal processing in the form of slew rate limiting can advantageously be adjusted or calibrated in accordance with the non-linear gain of any gamma table, and thus, can be used with and adjustably fine tuned for different imagers in different video systems.

In a presently preferred embodiment, the luminance signal of a picture is decomposed into a higher brightness level signal and a lower brightness level signal. The lower brightness level signal is slew rate limited to limit the difference in brightness levels between adjacent pixels. The higher brightness level signal is delayed in time to match the processing delay through the slew rate limiter. The delay matched higher brightness level signal and the slew rate limited lower brightness level signal are then combined to form a modified luminance signal. The demarcation between higher and lower brightness levels is adjustable and positive and negative slew rates are adjustable. The adjustments are advantageously independent of one another, and are preferably related to transitions between lower gain and higher gain portions of the gamma table.

In a video display system the modified luminance signal can be supplied to a color space converter, also referred to as a matrix, together with the R-Y and B-Y chrominance signals. The chrominance signals are also delayed to match the delay through the sparkle reduction circuit. The outputs of the color space converter are video drive signals, for example, R G B, supplied to the LCOS imager. The sparkle reduction processing of the luminance signal can be expected to significantly reduce the sparkle problem.

The outputs of the color space converter are video drive signals, for example, R G B, supplied to the LCOS imager. In another embodiment, one or two or all of the video drive signals are also subjected to the same sparkle reduction processing as is the luminance signal. Video drive signals that are not sparkle reduced must be delay matched. The modified video drive signals are then supplied to the liquid crystal imager. When all of the video drive signals are thus further processed, the sparkle problem can be reduced even further. Each decomposer advantageously has an independently selectable brightness level threshold and slew rate limits.

In yet another embodiment, the luminance signal is not sparkle reduced, but one or two or all of the video drive signals are processed for sparkle reduction. Video drive signals that are not sparkle reduced must be delay matched.

In each embodiment, the sparkle reduction processing changes the brightness levels of the pixels in the lowest brightness levels, corresponding to the highest gain portion of the gamma table, in such a way as to reduce the occurrence of declination in the LCOS imager. A threshold for the luminance signal decomposer, for example, can be expressed as a digital fraction, for example a digital value of 60 out of a range of 255 digital steps (60/255), as would be present in an 8-bit signal. The threshold can also be expressed in IRE, which ranges from 0 to 100 in value, 100 IRE representing maximum brightness. The IRE level can be calculated by multiplying the digital fraction by 100. The IRE scale is a convenient way to normalize and compare brightness levels between signals having different numbers of bits. The value of 60, for example, corresponds approximately to 24 IRE. In a presently preferred embodiment, the threshold value for the luminance decomposer is 8, corresponding to approximately 3.1 IRE.

The values chosen for the demarcation between higher and lower brightness level signals and the limit values chosen for the positive and negative slew rates are related to the operating characteristics of the imagers because the declination resulting in the sparkle artifact is a function of imager operation.

### Brief Description of the Drawings

Figure 1 is a block diagram of a sparkle reducing circuit in accordance with the inventive arrangements.
Figure 2 is a block diagram useful for explaining the operation of a decomposer in Figure 1.
Figure 3 is a block diagram useful for explaining the operation of a delay matching circuit and a slew rate limiter in Figure 1.
Figure 4 is a block diagram of a portion of a video display system incorporating different combinations of sparkle reducing circuits.
Figures 5(a)-5(e) are waveforms useful for explaining the operation of the sparkle reducing circuit.

### Detailed description of the Preferred Embodiments

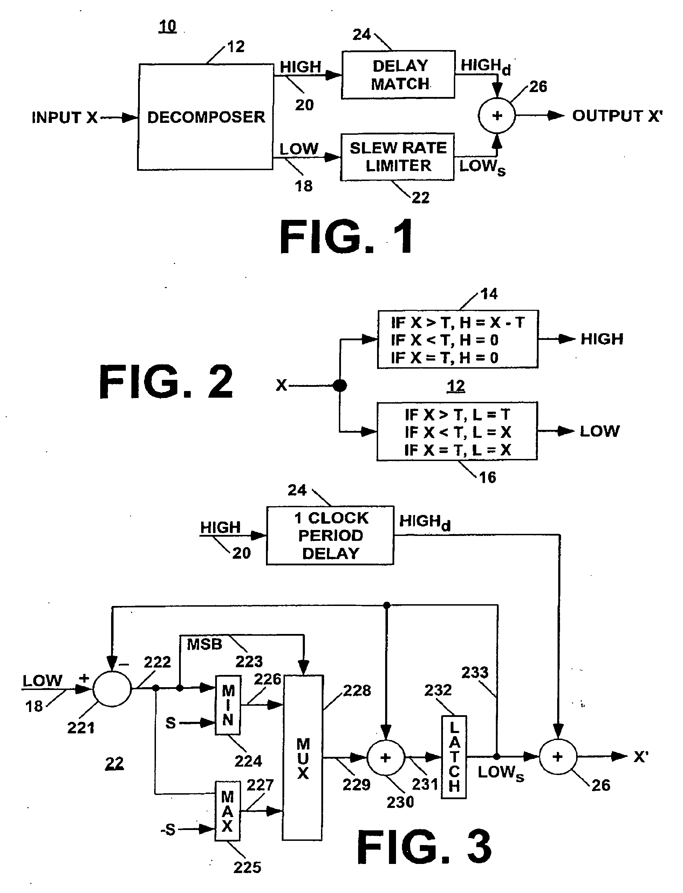

A circuit for reducing sparkle artifacts attributed to declination errors in liquid crystal video systems, for example LCOS video systems, is shown in Figure 1 and generally denoted by reference numeral 10. The circuit comprises a decomposer 12, a slew rate limiter 22, a delay match circuit 24 and an algebraic unit 26. An input video signal X, for example a luminance signal or a video drive signal, is modified by the circuit 10, and in response, an output video signal X' is generated. The video signal is a digital signal, and the waveform is a succession of digital samples representing brightness levels. The output signal X' has a similar digital format. The decomposer 12 generates a higher brightness level signal 20 and a lower brightness level signal 18. The operation of decomposer 12 is illustrated in Figure 2.

With reference to Figure 2, a block 14 has a first set of rules for generating the higher brightness level signal. The input signal X represents a succession of brightness level samples defining a luminance input signal. The brightness level of each sample can be expressed numerically as a digital value or an IRE level, for example 60/255 or 24 IRE, as explained above. The letter T represents a threshold value, which can also be expressed as a digital value or an IRE level. If X is greater than T, then the brightness level H of the higher brightness level signal is equal to X minus T. If X is less than T, then the brightness level H of the higher brightness level signal is equal to 0.

A block 16 has a second set of rules for generating the lower brightness level signal. If X is greater than T, then the brightness level L of the lower brightness level signal is equal to the threshold T. If X is less than T, then the brightness level L of the lower brightness level signal is equal to X.

It may be noted that when X = T, the output of block 14 will be the same whether X is defined as less than or equal to T, or X is defined as greater than or equal to T. In each case, H is equal to 0. It may also be noted that when X = T, the output of block 16 will be the same whether X is defined as less than or equal to T, or X is defined as greater than or equal to T. In each case, L is equal to X.

It should be appreciated that the sum of the HIGH and LOW decomposed signals is always equal to X. When X is greater than T, The sum of H + L = X - T + T = X. When X is less than T, the sum of H + L = 0 + X = X. When X equals T, the sum of H + L = 0 + X = X.

Referring again to Figure 1, the lower brightness level signal 18 is an input to the slew rate limiter 22. The higher brightness level signal 20 is an input to the delay match circuit 24. The details of the slew rate limiter 22 and the delay match circuit 24 are shown in Figure 3. Slew rate limiter 22 assures that successive output signals from the slew rate limiter will not vary by more than the predetermined slew rate. The decomposed LOW signal 18 is an input to an algebraic unit 221. The other input to the algebraic unit 221 is the preceding output of the slew rate limiter stored in latch 232. The last output value LOWS is subtracted from the input value to determine the difference. The difference on output line 222 is an input to a first comparator 224 denoted MIN and a second comparator 225 denoted MAX. The difference is tested in the MIN circuit to see if the difference is greater than a positive slew limit S and is also tested in the MAX circuit to see if the difference is more negative than the negative slew limit -S. It is not necessary that the positive and negative slew limits have the same absolute value, although the same absolute value is used in the embodiment shown in Figure 3.

The most significant bit (MSB) of the difference signal 222 is the control input to a multiplexer (MUX) 228. The most significant bit of the difference indicates the polarity of the difference and selects the output 226 of comparator 224 or the output 227 of comparator 225. The output of the MIN comparator is selected when the difference is positive and the output of the MAX comparator is selected when the difference is negative. The output of the multiplexer on line 229 is a slew rate limited difference that is added to the brightness level of the previous slew rate limited output pixel in algebraic unit 230, in order to generate the next new pixel. The output of the algebraic unit 230 on line 231 is stored in the latch 232. The output of the latch, LOWs is a stream of slew rate limited pixels. The embodiment of the slew rate limiter shown in Figure 3 incurs a one pixel delay, even if the slew rate is not limited. The clock signals are omitted from Figure 3 for purposes of clarity.

Although the positive and negative slew rates in the example shown in Figure 3 have the same absolute value, this need not be the case. Advantageously, the slew rates can be set independently for sample values greater than the preceding sample value and for sample values less than the preceding pixel value. If the positive and negative slew rates are equal to 1, for example, then successive outputs of the slew rate limiter will not differ from one another by more than 1 digital value step. If the LOW signal has an 8-bit value, then successive outputs of the slew rate limiter will not differ from one another by more than one step out of 256 states, representing 255 steps.

The one pixel delay of the slew rate limiter corresponds to a one clock period delay, and accordingly, the delay match circuit 24 provides a one clock period delay for the higher brightness level signal. It is possible under some circumstances that the delay incurred by the slew rate limiter can exceed one clock period delay, but the delay match circuit need not be adjusted accordingly. The slew rate limited lower brightness level signal LOWS and the delayed higher brightness level signal are combined in the algebraic unit 26, which generates the output signal X'.

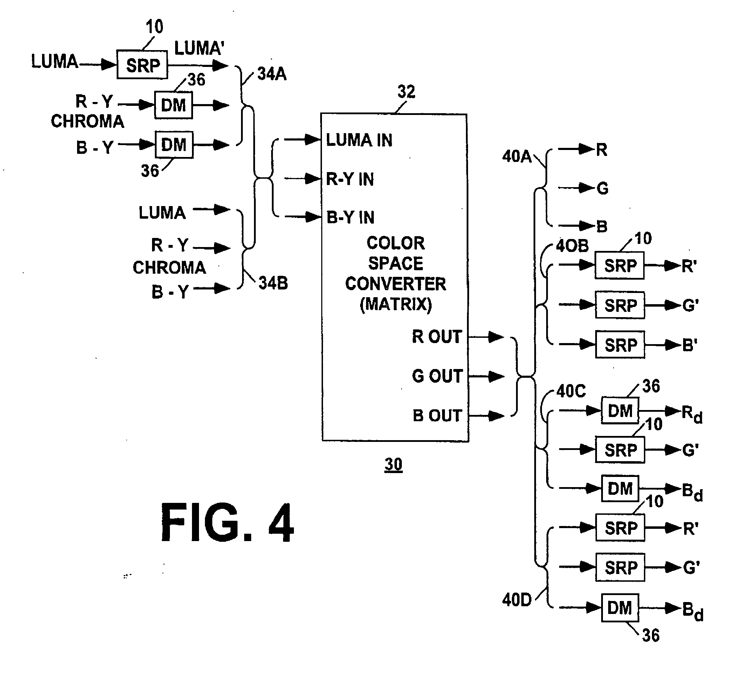

A video system 30 shown in Figure 4 illustrates various combinations in which video signals, for example luminance signals and video drive signals, can be processed for sparkle reduction. A color space converter, or matrix, 32 generates video drive signals, for example RGB, responsive to a luminance signal, denoted LUMA, and chrominance signals, denoted CHROMA. The chrominance signals are more particularly designated R-Y and B-Y.

Two sets of inputs to the color space converter 32 are denoted 34A and 34B. In set 34A the LUMA signal input is modified by sparkle reduction processor (SRP) 10 to generate LUMA'. The CHROMA signals are delayed by delay match (DM) circuits 36. In set 34B the LUMA signal is not modified and the CHROMA signals are not delay matched.

Four sets of outputs from the color space converter 32 are denoted 40A, 40B, 40C and 40D. In set 40A the video drive signals RGB are not modified. In set 40B, each one of the RGB video drive signals is modified by a sparkle reduction processor 10. No delay matching is necessary. In set 40C only one of the video drive signals, for example G, is modified by sparkle reduction processor 10 to generate G'. The remaining video drive signals are delayed by delay matching circuits 36. In set 40D only two of the video drive signals, for example R and G, are modified by sparkle reduction processors 10 to generate R' and G'. The remaining video drive signal is delayed by delay matching circuit 36. Input set 34A can be used with any one of output sets 40A, 40B, 40C or 40D. Input set 34B can be used with any one of output sets 40B, 40C or 40D. The combination of input set 34B and output set 40A does not include sparkle reduction processing.

It has been found that using the combination of input set 34A and output set 40A can significantly reduce the sparkle artifact attributed to declination. It has also been found that using the combination of input set 34A and output set 40B can reduce the sparkle attributed to declination even further. This substantial reduction advantageously solves the sparkle problem for all practical purposes. It should be appreciated that although the sparkle reduction processing circuits in Figure 4 can be identical to one another, the threshold value and the slew rate limits for each of these sparkle reduction processing circuits can advantageously be independently selected. This enables the sparkle reduction processing to be fine tuned to the different video signals.

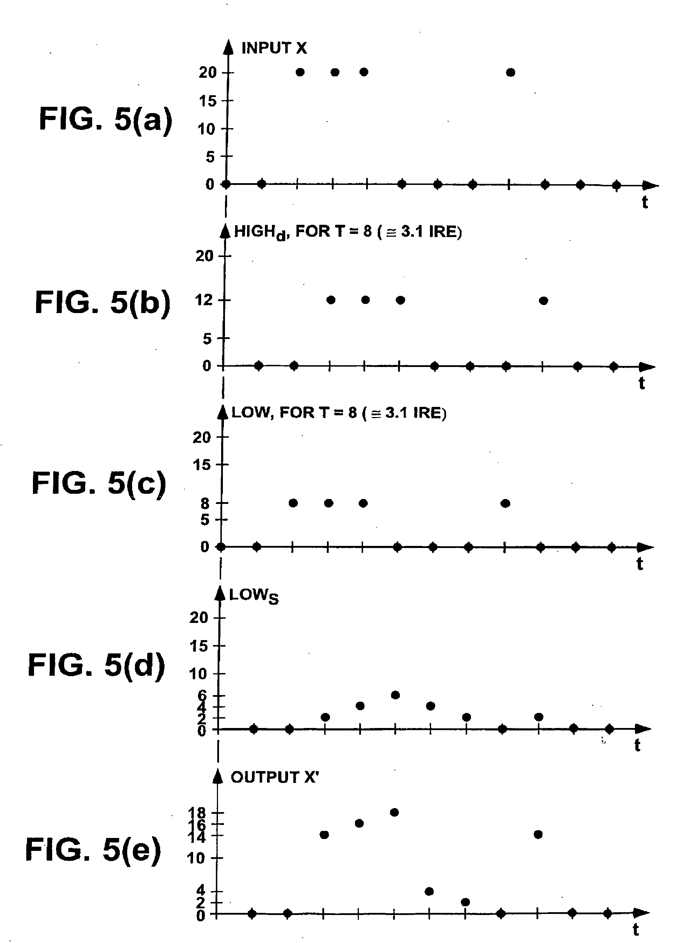

The response of circuit 10 in Figure 1 to a specific input signal is illustrated in Figures 5(a) through 5(e). For purposes of illustration, the threshold T is set to the digital value or state of 8, corresponding to approximately 3.1 IRE for an 8-bit signal. The positive slew rate is the digital value or state of +2, and the negative slew rate is -2. A state or value of 2 corresponds approximately to 0.7 IRE in an 8-bit signal. The waveforms of Figures 5(a)-5(e) are aligned in time to demonstrate the delays incurred by the low pass filtering and the delay match circuit. The first samples in each of Figures 5(a) and 5(c) are aligned with one another. The first samples of Figures 5(b), 5(d) and 5(f) are aligned with one another.

In Figure 5(a) an input signal X has the luminance values shown by the black dots. Some IRE equivalents are provided. Each black dot represents a sample of a luminance value as an input to the decomposer 12. Each sample represents the brightness level of a pixel. The signal X can be seen as including a pulse followed by an impulse. The threshold value of T, as explained in connection with the rules of Figure 2, is equal to 8 in this example. The slew rate limits of the slew rate limiter are set to 2 and to -2. Accordingly, successive output samples of the slew rate limiter cannot vary from one another by more than two digital steps, approximately 0.7 IRE.

The first two values of X are 0. In accordance with block 14, the value of the delay matched higher brightness level signal HIGHd shown in Figure 5(b) is 0 because X is less than T. The next three input values are 20. The corresponding levels of the higher brightness level signal in Figure 5(b) are 12 because the output value equals the input value minus the threshold value (X-T). The remaining sample values are calculated in the same fashion.

With reference to Figure 5(c), the first two output values of the lower brightness level signal LOW are 0, because the input is less than the threshold and the output equals the input. The next three output values are equal to 8 because the input value is greater than the threshold, and in this case, the output equals the threshold value. The remaining samples are calculated in the same fashion.

Figure 5(d) represents the output LOW_{S} of slew rate limiter 22 responsive to the signal shown in Figure 5(c). The values of the first and second samples of LOW are 0. Since 0 is less than 2, the values of the first two samples of LOWs are 0. The value of the third sample of LOW is 8. Since 8 exceeds 0 by more than the slew limit of 2, the value of the third sample of LOWS is 2. The value of the fourth sample of LOW is 8. Since 8 exceeds 2 by more than the slew limit of 2, the value of the fourth sample of LOWS is 4. The value of the fifth sample of LOW is 8. Since 8 exceeds 4 by more than the slew limit of 2, the value of the fifth sample of LOWS is 6. The value of the sixth sample of LOW is 0. Since 0 is less than 6 by more than the slew limit of 2, the value of the sixth sample of LOWs is 4. The value of the seventh sample of LOW is 0. Since 0 is less than 4 by more than the slew limit of 2, the value of the seventh sample of LOWs is 2. The value of the eighth sample of LOW is 0. Since 0 is not less than 2 by more than the slew limit of 2, the value of the seventh sample of LOWs is 0. The value of the ninth sample of LOW is 8. Since 8 exceeds 0 by more than the slew limit of 2, the value of the ninth sample of LOWs is 2. The value of the tenth sample of LOW is 0. Since 2 does not exceed 0 by more than the slew limit of 2, the value of the tenth sample of LOWs is 0. The value of the eleventh sample of LOW is 0. Since 0 does not exceed 0 by more than the slew limit of 2, the value of the eleventh sample of LOWs is 0. It can be noted that the edges or transitions of the pulse and impulse which were still evident in the waveform of Figure 5(c) have been almost completely smoothed, or rolled off, by the slew rate limiting.

Finally, Figure 5(e) is the output signal X', which is the sum of the waveforms in Figures 5(b) and 5(d). It can be noted from the waveform in Figure 5(e) that the essential character of the pulse and of the impulse in the input waveform X has been retained in the output waveform X', but sharp edges or transitions between adjacent sample values have been advantageously reduced. The roll off is most evident in the leading edge of the output pulse. Only the very dark areas of the picture are noticeably affected by the sparkle reduction processing, as evidenced by the very low values of the threshold and the slew rate limits. Accordingly, the high definition horizontal resolution is advantageously maintained.

The methods and apparatus illustrated herein teach how the brightness levels of adjacent pixels can be restricted or limited in the horizontal direction, and indeed, these methods and apparatus solve the sparkle problem. Nevertheless, these methods and apparatus can also be extended to restricting or limiting brightness levels of adjacent pixels in the vertical direction, or in both the horizontal and vertical directions.

## Claims

1. A method for reducing sparkle artifacts in a liquid crystal display **characterized by** the steps of:
dividing a video signal for a picture into a higher brightness level signal and a lower brightness level signal with respect to a threshold value, the threshold value selected based upon a characteristic of said liquid crystal imager;
slew rate limiting said lower brightness level signal;
delaying said higher brightness level signal to match a processing delay incurred by said slew rate limiting; and,
combining said slew rate limited lower brightness level signal and said delay matched higher brightness level signal to generate a modified video signal (OUTPUT X') less likely to result in sparkle artifacts in said display.

2. The method of claim 1, comprising the step of dividing said video signal in accordance with a transition between lower and higher gain portions of a gamma table associated with said display.

3. The method of claim 1, wherein said dividing step comprises the steps of:
selecting a brightness level threshold;
comparing successive input brightness levels of said luminance signal to said selected threshold;
for each said input brightness level greater than said threshold in said comparing step, assigning to said higher brightness level signal a brightness level equal to a difference between said greater input brightness level and said threshold and assigning to said lower brightness level signal a brightness level equal to said threshold; and,
for each said input brightness level less than said threshold in said comparing step, assigning to said higher brightness level signal a brightness level equal to zero and assigning to said lower brightness level signal a brightness level equal to said input brightness level.

4. The method of claim 3, comprising the steps of:
assigning to said higher brightness level signal a brightness level equal to zero if said input brightness level is equal to said threshold; and,
assigning to said lower brightness level signal a brightness level equal to said input brightness level if said input brightness level is equal to said threshold.

5. The method of claim 1, comprising the step of delaying said higher brightness level signal to compensate for a delay incurred in said slew rate limiting.

6. The method of claim 1, comprising the steps of:
applying said sparkle reducing steps to a luminance signal for said picture;
delaying chrominance signals for said picture; and,
generating a plurality of video drive signals from said modified luminance signal and said delayed chrominance signals.

7. The method of claim 6, comprising the steps of:
applying said sparkle reducing steps to at least one of said video drive signals; and,
delaying all non-sparkle-reduced video drive signals.

8. The method of claim 1, comprising the steps of:
generating a plurality of video drive signals from luminance and chrominance signals;
applying said sparkle reducing steps to at least one of said video drive signals; and,
delaying all non-sparkle-reduced video drive signals.

9. The method of claim 8, comprising the step of applying said sparkle reducing steps to each of said video drive signals.

10. The method of claim 7 comprising the step of independently selecting slew rate limits for said slew rate limiting steps.

11. A circuit for reducing sparkle artifacts in a liquid crystal display, **characterized by**:
means for dividing a video signal for a picture into a higher brightness level signal and a lower brightness level signal with respect to a threshold value, the threshold value selected based upon a characteristic of said liquid crystal display;
means for slew rate limiting said lower brightness level signal;
means for delaying said higher brightness level signal to match a processing delay incurred by said slew rate limiting; and,
means for combining said slew rate limited lower brightness level signal and said delay matched higher brightness level signal to generate a modified video signal less likely to result in sparkle artifacts in said display.

12. The circuit of claim 11, wherein said dividing means comprises:
a register for storing a selected threshold value;
a comparator for comparing successive input brightness levels of said luminance signal to said selected threshold value;
an algebraic circuit for subtracting said threshold value from every one of said input brightness levels greater than said threshold;
a clipping circuit for limiting to said threshold value every one of said input brightness levels greater than said threshold value
a first gate for propagating a zero value brightness level for every one of said input brightness levels less than said threshold value;
a second gate for propagating said input brightness level for every one of said input brightness levels less than said threshold; and,
said higher brightness signal is formed by outputs from said algebraic circuit and said first gate and said lower brightness level signal is formed by outputs from said clipping circuit and said second gate.

13. The circuit of claim 12, wherein:
said higher brightness level signal is formed by said output of said first gate when said input brightness level is equal to said threshold value; and,
said lower brightness level signal is formed by said output of said second gate when said input brightness level is equal to said threshold value.

14. The circuit of claim 11, wherein said threshold value relates to a transition between lower and higher gain portions of a gamma table associated with said display.

15. The circuit of claim 11, wherein said higher brightness level signal is delayed to match a delay incurred by operation of said slew rate limiting means.

16. The circuit of claim 11, wherein said video signal is a luminance signal, and further comprising:
means for delaying chrominance signals for said picture; and,
means for generating a plurality of video drive signals from said modified luminance signal and said delayed chrominance signals.

17. The circuit of claim 16, comprising:
means for dividing at least one of said video drive signals into a higher brightness level video drive signal and a lower brightness level video drive signal;
means for slew rate limiting said lower brightness level video drive signal;
means for delaying said higher brightness level video drive signal to match a processing delay incurred by said slew rate limiting; and,
means for combining said slew rate limited lower brightness level video drive signal and said delay matched higher brightness level video drive signal to generate a modified video drive signal resulting in a further reduction of declination in said display.

18. The circuit of claim 17, wherein said brightness level thresholds for said luminance signal dividing means and said video drive signal dividing means are independently selectable.

19. The circuit of claim 17, wherein slew rate limits for said slew rate limiting means are independently selectable.

20. The circuit of claim 17, comprising:
respective means for dividing, slew rate limiting, delaying and combining each one of said video drive signals; and,
each of said luminance signal dividing means and said video drive signal dividing means having independently selectable brightness level thresholds and each of said slew rate limiting means having independently selectable slew rate limits.

## Patentansprüche

1. Verfahren zum Reduzieren von Aufblitzartefakten in einer Flüssigkristallanzeige, **gekennzeichnet durch** die folgenden Schritte:
Dividieren eines Videosignals für ein Bild in ein höherer-Helligkeitspegel-Signal und ein niedrigerer-Helligkeitspegel-Signal bezüglich eines Schwellwerts, wobei der Schwellwert ausgewählt wird auf Basis einer Charakteristik der Flüssigkristallanzeige;
Begrenzen der Anstiegsgeschwindigkeit des niedrigerer-Helligkeitspegel-Signals;
Verzögern des höherer-Helligkeitspegel-Signals entsprechend einer **durch** die Anstiegsgeschwindigkeitsbegrenzung verursachten Verarbeitungsverzögerung; und
Kombinieren des hinsichtlich Anstiegsgeschwindigkeit begrenzten niedrigerer-Helligkeitspegel-Signals und des verzögerungsangepaßten höherer-Helligkeitspegel-Signals zum Erzeugen eines modifizierten Videosignals (AUSGABE X'), das weniger wahrscheinlich ist, in der Anzeige zu Aufblitzartefakten zu führen.

2. Verfahren nach Patentanspruch 1, umfassen den Schritt des Dividierens des Videosignals gemäß einem Übergang zwischen Abschnitten einer mit der Anzeige assoziierten Gammatabelle mit niedrigerem und höherem Verstärkungsfaktor.

3. Verfahren nach Patentanspruch 1, wobei der Dividierungsschritt die folgenden schritte umfaßt:
Auswählen eines Helligkeitspegelschwellwerts;
Vergleichen aufeinanderfolgender Eingangshelligkeitspegel des Luminanzsignals mit dem ausgewählten Schwellwert;
für jeden Eingangshelligkeitspegel größer als der Schwellwert in dem Vergleichsschritt, Zuweisen eines Helligkeitspegels gleich einer Differenz zwischen dem größeren Eingangshelligkeitspegel und dem Schwellwert zu dem höherer-Helligkeitspegel-Signal und Zuweisen eines Helligkeitspegels gleich dem Schwellwert zu dem niedrigerer-Helligkeitspegel-Signal ; und
für jeden Eingangshelligkeitspegel kleiner als der Schwellwert in dem Vergleichsschritt, Zuweisen eines Helligkeitspegels gleich null zu dem höherer-Helligkeitspegel-Signal und Zuweisen eines Helligkeitspegels gleich dem Eingangshelligkeitspegel zu dem niedrigerer-Helligkeitspegel-Signal.

4. Verfahren nach Patentanspruch 3, umfassend die folgenden Schritte:
Zuweisen eines Helligkeitspegels gleich null zu dem höherer-Helligkeitspegel-Signal, wenn der Eingangshelligkeitspegel gleich dem Schwellwert ist; und
Zuweisen eines Helligkeitspegels gleich dem Eingangshelligkeitspegel zu dem niedrigerer-Helligkeitspegel-Signal, wenn der Eingangshelligkeitspegel gleich dem Schwellwert ist.

5. Verfahren nach Patentanspruch 1, umfassend den Schritt des Verzögerns des höherer-Helligkeitspegel-Signals zum Kompensieren einer bei dem Anstiegsgeschwindigkeitsbegrenzen verursachten Verzögerung.

6. Verfahren nach Patentanspruch 1, umfassend die folgenden Schritte:
Anwenden der Aufblitzreduzierungsschritte auf ein Luminanzsignal für das Bild;
Verzögern von Chrominanzsignalen für das Bild; und
Erzeugen mehrerer Videoansteuersignale aus dem modifizierten Luminanzsignal und den verzögerten Chrominanzsignalen.

7. Verfahren nach Patentanspruch 6, umfassend die folgenden Schritte:
Anwenden der Aufblitzreduzierungsschritte auf mindestens eines der Videoansteuersignale; und
Verzögern aller nicht-aufblitzreduzierten Videoansteuersignale.

8. Verfahren nach Patentanspruch 1, umfassend die folgenden Schritte:
Erzeugen mehrerer Videoansteuersignale aus Luminanz- und
Chrominanzsignalen;
Anwenden der Aufblitzreduzierungsschritte auf mindestens eines der Videoansteuersignale; und
Verzögern aller nicht-aufblitzreduzierten Videoansteuersignale.

9. Verfahren nach Patentanspruch 8, umfassend den Schritt des Anwendens der Aufblitzreduzierungsschritte auf jedes der Videoansteuersignale.

10. Verfahren nach Patentanspruch 7, umfassend den Schritt des unabhängigen Auswählens von Anstiegsgeschwindigkeitsgrenzen für die Anstiegsgeschwindigkeitsbegrenzungsschritte.

11. Schaltung zum Reduzieren von Aufblitzartefakten in einer Flüssigkristallanzeige, **gekennzeichnet durch**:
Mittel zum Dividieren eines Videosignals für ein Bild in ein höherer-Helligkeitspegel-Signal und ein niedrigerer-Helligkeitspegel-Signal bezüglich eines Schwellwerts, wobei der Schwellwert ausgewählt wird auf Basis einer Charakteristik der Flüssigkristallanzeige;
Mittel zum Begrenzen der Anstiegsgeschwindigkeit des niedrigerer-Helligkeitspegel-Signals;
Mittel zum Verzögern des höherer-Helligkeitspegel-Signals entsprechend einer **durch** die Anstiegsgeschwindigkeitsbegrenzung verursachten Verarbeitungsverzögerung; und
Mittel zum Kombinieren des hinsichtlich Anstiegsgeschwindigkeit begrenzten niedrigerer-Helligkeitspegel-Signals und des verzögerungsangepaßten höherer-Helligkeitspegel-Signals zum Erzeugen eines modifizierten Videosignals, das weniger wahrscheinlich ist, in der Anzeige zu Aufblitzartefakten zu führen.

12. Schaltung nach Patentanspruch 11, wobei das Dividierungsmittel folgendes umfaßt:
ein Register zum Speichern eines ausgewählten Schwellwerts;
einen Vergleicher zum Vergleichen aufeinanderfolgender Eingangshelligkeitspegel des Luminanzsignals mit dem ausgewählten Schwellwert;
eine algebraische Schaltung zum Subtrahieren des Schwellwerts von jedem einen der Eingangshelligkeitspegel größer als der Schwellwert;
eine Beschneidungsschaltung zum Begrenzen des Schwellwerts jedes einzelnen der Eingangshelligkeitspegel größer als der Schwellwert;
ein erstes Gate zum Propagieren eines Nullwert-Helligkeitspegels für jeden einzelnen der Eingangshelligkeitspegel kleiner als der Schwellwert;
ein zweites Gate zum Propagieren des Eingangshelligkeitspegels für jeden einzelnen der Eingangshelligkeitspegel kleiner als der Schwellwert; und
das höherer-Helligkeitspegel-Signal wird ausgebildet durch Ausgaben von der algebraischen Schaltung, und das erste Gate und das niedrigerer-Helligkeitspegel-Signal werden gebildet durch Ausgaben von der Beschneidungsschaltung und dem zweiten Gate.

13. Schaltung nach Patentanspruch 12, wobei:
das höherer-Helligkeitspegel-Signal von dem Ausgang des ersten Gate ausgebildet wird, wenn der Eingangshelligkeitspegel gleich dem Schwellwert ist; und
das niedrigerer-Helligkeitspegel-Signal von dem Ausgang des zweiten Gate ausgebildet wird, wenn der Eingangshelligkeitspegel gleich dem Schwellwert ist.

14. Schaltung nach Patentanspruch 11, wobei der Schwellwert zu einem Übergang zwischen Abschnitten einer mit der Anzeige assoziierten Gammatabelle mit niedrigerem und höherem Verstärkungsfaktor in Beziehung steht.

15. Schaltung nach Patentanspruch 11, wobei das höherer-Helligkeitspegel-Signal entsprechend einer durch eine Operation des Anstiegsgeschwindigkeitsbegrenzungsmittels verursachten Verzögerung verzögert wird.

16. Schaltung nach Patentanspruch 11, wobei das Videosignal ein Luminanzsignal ist, und weiterhin umfassend:
Mittel zum Verzögern von Chrominanzsignalen für das Bild; und
Mittel zum Erzeugen mehrerer Videoansteuersignale aus dem modifizierten Luminanzsignal und den verzögerten Chrominanzsignalen.

17. Schaltung nach Patentanspruch 16, umfassend:
Mittel zum Dividieren mindestens eines der Videoansteuersignale in ein höherer-Helligkeitspegel-Videoansteuersignal und ein niedrigerer-Helligkeitspegel-Videoansteuersignal;
Mittel zum Anstiegsgeschwindigkeitsbegrenzen des niedrigerer-Helligkeitspegel-Videoansteuersignals;
Mittel zum Verzögern des höherer-Helligkeitspegel-Videoansteuersignals entsprechend einer durch das Anstiegsgeschwindigkeitsbegrenzen verursachten verarbeitungsverzögerung; und
Mittel zum Kombinieren des hinsichtlich Anstiegsgeschwindigkeit begrenzten niedrigerer-Helligkeitspegel-Videoansteuersignals und des verzögerungsangespaßten höherer-Helligkeitspegel-Videoansteuersignals zum Erzeugen eines modifizierten Videoansteuersignals, was zu einer weiteren Reduzierung der Deklination in der Anzeige führt.

18. Schaltung nach Patentanspruch 17, wobei die Helligkeitspegelschwellwerte für das Luminanzsignaldividierungsmittel und das Videoansteuersignaldividierungsmittel unabhängig ausgewählt werden können.

19. Schaltung nach Patentanspruch 17, wobei die Anstiegsgeschwindigkeitsgrenzen für das Anstiegsgeschwindigkeitsbegrenzungsmittel unabhängig ausgewählt werden können.

20. Schaltung nach Patentanspruch 17, umfassend:
jeweilige Mittel zum Dividieren, Anstiegsgeschwindigkeitsbegrenzen, Verzögern und Kombinieren jedes einzelnen der Videoansteuersignale; und
wobei jedes der Luminanzsignaldividierungsmittel und der Videoansteuersignaldividierungsmittel unabhängig auswählbare Helligkeitspegelschwellwerte aufweisen und jedes der Anstiegsgeschwindigkeitsbegrenzungsmittel unabhängig auswählbare Anstiegsgeschwindigkeitsgrenzen aufweist.

## Revendications

1. Procédé de réduction des artefacts de scintillement dan un appareil de visualisation à cristaux liquides **caractérisé par** les phases suivantes :
division d'un signal vidéo relatif à une image en un signal de niveau de brillance plus élevé et un signal de niveau de brillance moins élevé par rapport à une valeur de seuil, la valeur de seuil étant choisie en fonction d'une caractéristique dudit système de visualisation ;
limitation de la vitesse de balayage dudit signal de niveau de brillance moins élevé;
retard dudit signal de niveau de brillance de niveau plus élevé pour s'adapter au retard de traitement provoqué par ladite limitation de vitesse de balayage ; et
combinaison dudit signal de niveau de brillance moins élevé qui a subi la limitation de vitesse de balayage et dudit signal de niveau de brillance plus élevé qui a subi l'adaptation aux retards pour générer un signal vidéo modifié (sortie X') qui a moins de chance de provoquer des artefacts de scintillement dans ledit système de visualisation.

2. Procédé selon la revendication 1, comportant la phase de division dudit signal vidéo en fonction d'une transition entre des parties de gain plus ou moins élevé d'une table gamma associée audit appareil de visualisation.

3. Procédé selon la revendication 1, dans lequel ladite phase de division comporte les phases suivantes :
sélection d'un seuil de niveau de brillance ;
comparaison de niveaux de brillance d'entrée successifs dudit signal de luminance audit seul sélectionné ;
pour chaque dit niveau de brillance d'entrée supérieur audit seuil dans ladite phase de comparaison, affectation audit signal de niveau de brillance plus élevé d'un niveau de brillance égal à la différence entre ledit niveau de brillance d'entrée supérieur et ledit seuil et affectation audit signal de niveau de brillance inférieur d'un niveau de brillance égal audit seuil ; et
Pour chaque dit niveau de brillance d'entrée inférieur audit seuil dans ladite phase de comparaison, affectation audit signal de niveau de brillance plus élevé d'un niveau de brillance égal à zéro et affectation audit signal de niveau de brillance moins élevé d'un niveau de brillance égal audit niveau de brillance d'entrée.

4. Procédé selon la revendication 3, comportant les phases suivantes :
affectation audit signal de niveau de brillance plus élevé d'un niveau de brillance égal à zéro si ledit niveau de brillance d'entrée est égal audit seuil ; et
affectation audit signal de niveau de brillance moins élevé d'un niveau de brillance égal audit niveau de brillance d'entrée si ledit niveau de brillance d'entrée est égal audit seuil.

5. Procédé selon la revendication 1, comportant la phase de retard dudit signal de niveau de brillance plus élevé pour compenser un retard subi dans ladite limitation de la vitesse de balayage.

6. Procédé selon la revendication 1, comportant les phases suivantes :
application desdites phases de réduction du scintillement à un signal de luminance pour ladite image ;
retard des signaux de chrominance pour ladite image ; et
génération d'une pluralité de signaux vidéo de commande à partir dudit signal de luminance modifié et desdits signaux de chrominance retardés.

7. Procédé selon la revendication 6, comportant les phases suivantes:
application des dites phases de réduction du scintillement à au moins un desdits signaux vidéo de commande ; et
retard de tous les signaux vidéo de commande non soumis à la réduction du scintillement.

8. Procédé selon la revendication 1, comportant les phases suivantes :
génération d'une pluralité de signaux vidéo de commande à partir de signaux de chrominance et de luminance ;
application desdites phase de réduction du scintillement à au moins un desdits signaux vidéo de commande ; et
retard de tous les signaux vidéo de commande non soumis à la réduction du scintillement.

9. Procédé selon la revendication 8, comportant la phase d'application desdites phases de réduction du scintillement à chacun desdits signaux vidéo de commande.

10. Procédé selon la revendication 7, comportant la phase de sélection indépendante des limites de la vitesse.

11. Circuit de réduction d'artefacts de scintillement dans un système de visualisation à cristaux liquides **caractérisé par**
un moyen de division d'un signal vidéo relatif à une image en un signal de niveau de brillance plus élevé et un signal de niveau de brillance moins élevé par rapport à une valeur de seuil, la valeur de seuil étant choisie en fonction d'une caractéristique dudit système de visualisation ;
un moyen de limitation de la vitesse de balayage dudit signal de niveau de brillance moins élevé ;
un moyen de retard dudit signal de niveau de brillance de niveau plus élevé pour s'adapter au retard de traitement provoqué par ladite limitation d vitesse de balayage ; et
un moyen de combinaison dudit signal de niveau de brillance le moins élevé qui a subi la limitation de vitesse de balayage et dudit signal de niveau de brillance plus élevé qui a subi l'adaptation aux retards pour générer un signal vidéo modifié qui a moins de chance de provoquer des artefacts de scintillement dans ledit système de visualisation.

12. Circuit selon la revendication 11, dans lequel ledit moyen de division comprend :
un registre pour enregistrer une valeur de seuil sélectionnée ;
un comparateur pour comparer les niveaux de brillance d'entrée successifs dudit signal de luminance à ladite valeur de seuil sélectionnée ;
un circuit algébrique pour soustraire ladite valeur de seuil de chacun desdits niveaux de brillance plus élevé que ledit seuil ;
un circuit d'écrêtage pour limiter à ladite valeur de seuil chacun desdits niveaux de brillance d'entrée supérieurs à ladite valeur de seuil ;
une première porte pour propager un niveau de brillance de valeur zéro pour chacun desdits niveaux de brillance d'entrée inférieurs à ladite valeur de seuil ;
une deuxième porte pour propager ledit niveau de brillance d'entrée pour chacun desdits niveaux de brillance d'entrée inférieurs à ladite valeur de seuil ; et
ledit signal de brillance le plus élevé est formé des sorties dudit circuit algébrique et de ladite première porte et ledit signal de niveau de brillance moins élevé est formé des sorties dudit circuit d'écrêtage et de ladite deuxième porte.

13. Circuit selon la revendication 12 , dans lequel :
ledit signal de niveau de brillance plus élevé est formé par ladite sortie de ladite première porte quand ledit niveau de brillance d'entrée est égal à ladite valeur de seuil.

14. Circuit selon la revendication 11, dans lequel ladite valeur de seuil se rapporte à une transition entre des parties de gain plus ou moins élevé d'une table gamma associée audit système de visualisation.

15. Circuit selon la revendication 11, dans lequel ledit signal de niveau de brillance plus élevé est retardé pour s'adapter à un retard du au fonctionnement dudit moyen de limitation de vitesse de balayage.

16. Circuit selon la revendication 11, dans lequel ledit signal vidéo est un signal de luminance ce circuit comportant en outre :
un moyen de retard des signaux de chrominance pour lesdites images ; et
un moyen de génération d'une pluralité de signaux vidéo de commande à partir desdits signaux de luminance modifiés et desdits signaux de chrominance retardés.

17. Circuit selon la revendication 16, comportant :
un moyen de division d'au moins un desdits signaux vidéo de commande en un signal vidéo de commande de niveau de brillance plus élevé et un signal vidéo de commande de niveau de brillance moins élevé
un moyen de limitation de vitesse de balayage appliqué audit signal vidéo de commande de niveau de brillance moins élevé ;
un moyen de retard dudit signal vidéo de commande de niveau de brillance plus élevé pour adapter à un traitement le retard du à ladite limitation de vitesse de balayage ; et
un moyen de combinaison dudit signal vidéo de commande de niveau de brillance moins élevé et dudit signal vidéo de commande de niveau de brillance plus élevé adapté aux retards pour générer un signal vidéo de commande modifié ayant pour résultat une réduction supplémentaire de déclinaison dans ledit système de visualisation.

18. Circuit selon la revendication 17, dans lequel lesdits seuils de niveau de brillance pour lesdits moyens de division dudit signal de luminance et des signaux vidéo de commande peuvent être sélectionnés de façon indépendante.

19. Circuit selon la revendication 17, dans lequel les limites dudit moyen de limitation de la vitesse de balayage peuvent être sélectionnées indépendamment.

20. Circuit selon la revendication 17, comportant :
les moyens respectifs de division, limitation en vitesse de balayage, retard et combinaison de chacun desdits signaux vidéo de commande ; et
chacun desdits moyens de division du signal de luminance et desdits signaux vidéo de commande ayant des seuils de niveau de brillance et chacun desdits moyens de limitation des vitesses de balayage ayant des limites qui peuvent être sélectionnés indépendamment.
